Europäisches Patentamt

European Patent Office

Office européen des brevets

(19)

(11) **EP 1 126 633 A1**

(12) **EUROPEAN PATENT APPLICATION**
published in accordance with Art. 158(3) EPC

(43) Date of publication:
**22.08.2001 Bulletin 2001/34**

(51) Int Cl.⁷: **H04B 7/10**, H04B 7/08,
H01Q 3/26

(21) Application number: **00935637.9**

(22) Date of filing: **12.06.2000**

(86) International application number:
**PCT/JP00/03790**

(87) International publication number:
**WO 00/77953 (21.12.2000 Gazette 2000/51)**

(84) Designated Contracting States:
**AT BE CH CY DE DK ES FI FR GB GR IE IT LI LU MC NL PT SE**
Designated Extension States:
**AL LT LV MK RO SI**

(30) Priority: **16.06.1999 JP 16969799**

(71) Applicant: **MATSUSHITA ELECTRIC INDUSTRIAL CO., LTD.**
**Kadoma-shi, Osaka 571-8501 (JP)**

(72) Inventors:
• **SAITO, Yoshiko**
  **Yokosuka-shi , Kanagawa 239-0806 (JP)**
• **UESUGI, Mitsuru**
  **Yokosuka-shi, Kanagawa 238-0048 (JP)**

(74) Representative: **Grünecker, Kinkeldey,**
**Stockmair & Schwanhäusser Anwaltssozietät**
**Maximilianstrasse 58**
**80538 München (DE)**

(54) **RADIO RECEIVER AND ADAPTIVE RECEIVING METHOD**

(57) An array synthesis section 102 performs the array synthesis of the received signals received by a plurality of antennas, and a maximum likelihood sequence estimation section 106 outputs a prospective symbol series to the received signal after the array synthesis, and a replica generation section 110 generates a replica signal from a known signal or a prospective symbol series, and a first tap coefficient estimation section 104 uses an error between the received signal after the array synthesis and the replica signal as likelihood information while performing the estimation and the updating of a tap coefficient to be used in the array synthesis, and a second tap coefficient estimation section 107 uses an error between the received signal after the array synthesis and the replica signal as likelihood information while performing the estimation and the updating of a tap coefficient to be used in the generation of the replica signal.

FIG. 7

**Description**

Technical Field

The present invention relates to a radio receiver and an adaptive reception method, in particular, relates to a radio receiver and its adaptive reception method equipped with an adaptive array antenna to be used in movable body communication.

Background Art

In the so-called training processing for performing the estimation of a tap coefficient by using a known signal section in a received signal, when the tap coefficient estimation to be applied to the array synthesis of an adaptive array antenna is controlled by only an array section, a delayed wave of a desired wave is also treated as an interference wave, and a null is turned to. Accordingly, a conventional radio receiver collectively estimates the tap coefficient to be used in the array synthesis and a tap coefficient to be used in equalization processing.

In the following, FIG. 1 to FIG. 6 are referred while the conventional radio receiver is described. FIG. 1 is a block diagram showing the schematic configuration of the conventional radio receiver; FIG. 2 is a block diagram showing the schematic configuration of an array synthesis section of the conventional radio receiver; FIG. 3 is a block diagram showing the schematic configuration of a feed forward filter (FFF) of the conventional radio receiver; FIG. 4 is a block diagram showing the schematic configuration of a maximum likelihood sequence estimation section of the conventional radio receiver; FIG. 5 is a block diagram showing the schematic configuration of a replica generation section of the conventional radio receiver; and FIG. 6 is a block diagram showing the schematic configuration of a tap coefficient estimation section of the conventional radio receiver.

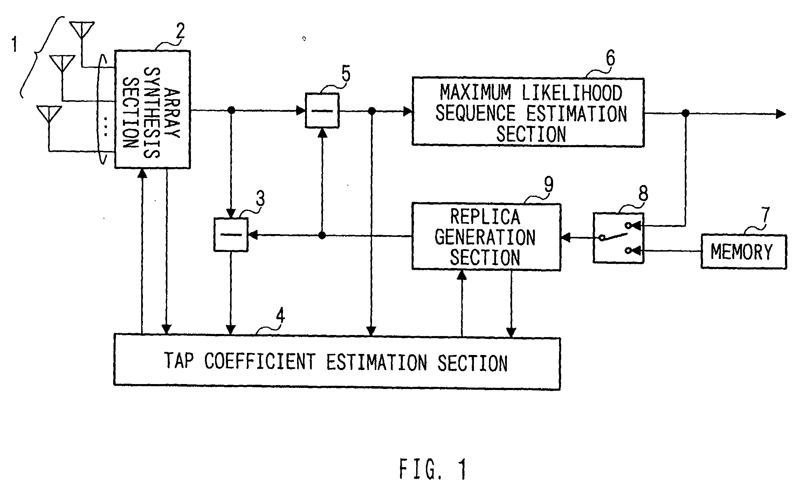

In FIG. 1, adaptive array antennas 1 receive radio signals. An array synthesis section 2 performs the reception processing of the received signals from each antenna, and then performs the weighting processing of the received signals to synthesize them. The detailed operation of the array synthesis section 2 will be described later.

A subtracter 3 subtracts a replica signal generated by a replica generation section 9, which will be described later, from the received signal after the array synthesis processing. The result of the subtraction is utilized as likelihood information when a tap coefficient estimation section 4, which will be described later, calculates tap coefficients in the array synthesis processing.

The tap coefficient estimation section 4 calculates the tap coefficient at the time of the array synthesis and the tap coefficient at the time of replica signal generation by utilizing the outputs of the subtracter 3 and a subtracter 5, which will be described later, as the likelihood information. The details of the operation will be described later.

The subtracter 5 subtracts a replica signal generated by the replica generation section 9, which will be described later, from the received signal after the array synthesis processing. The result of the subtraction is used as the likelihood information at the time of the calculation of the tap coefficient at the time of the generation of a replica signal by the tap coefficient estimation section 4, which will be described later.

A maximum likelihood sequence estimation section 6 judges the received signals in conformity with the Viterbi algorithm by using an output from the subtracter 5 as the likelihood information, and outputs a prospective symbol series.

A memory 7 holds a known signal. A switch 8 outputs the known signal stored in the memory 7 to the replica generation section 9 at the time of the tap coefficient estimation by means of the known signal in symbol synchronization timing, and outputs the prospective symbol series of the received signal to the replica generation section 9 in the other case. Incidentally, the symbol synchronization timing can be obtained from any one of reception processing sections.

The replica generation section 9 multiplies a prospective symbol series of the known signal or the received signal by the tap coefficient that has been estimated by the tap coefficient estimation section 4 to generate the replica signal. The operation thereof will be described later.

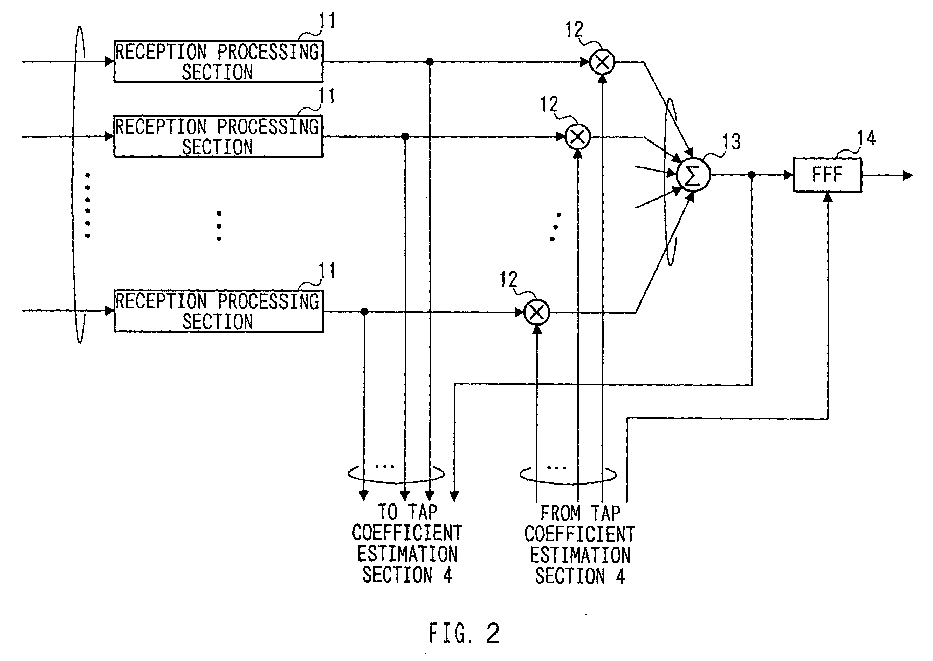

Next, FIG. 2 is referred while the configuration of the array synthesis section 2 of the conventional radio receiver is described. In FIG. 2, the reception processing sections 11 perform respectively reception processing of the received signal from each antenna, and multipliers 12 multiply each signal after the reception processing by a tap coefficient instructed by the tap coefficient estimation section 4, respectively, to perform its weighting processing. A summation 13 adds all of the outputs of the multipliers 12. An FFF 14 absorbs the timing jitter and the synchronization deviation of the received signal after synthesization. The detailed operation of them will be described later.

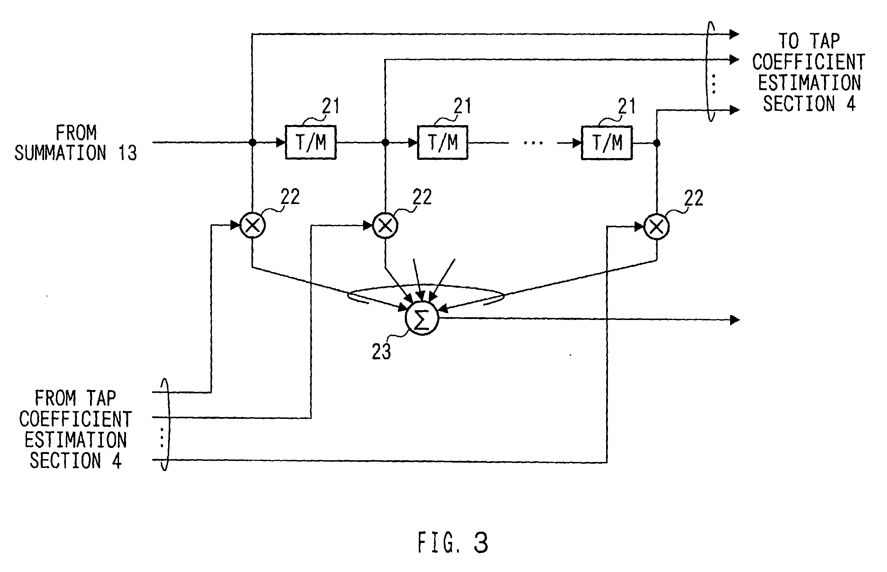

Next, FIG. 3 is referred while the configuration of the FFF 14 is described. In FIG. 3, delay devices 21 are delay devices for delaying an input signal for the period of time of T/M corresponding to 1/M ("M" is an arbitrary natural number) of the symbol period T. Multipliers 22 multiply each signal after the reception processing by a tap coefficient instructed by the tap coefficient estimation section 4, respectively, to perform the weighting processing. A summation 23 adds all of the outputs of the multipliers 22 for absorbing the timing jitter and the synchronization deviation of a received signal, and then outputs the result of the addition.

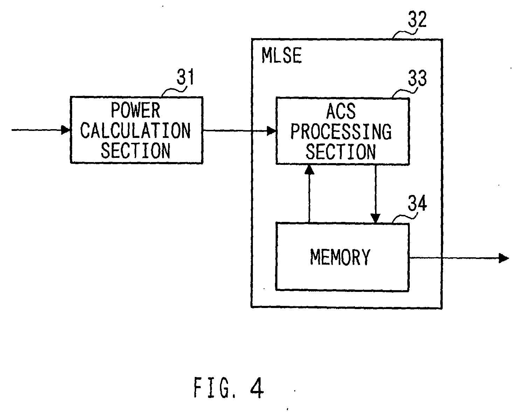

Next, FIG. 4 is referred while the configuration of the maximum likelihood sequence estimation section 6 is described. In the FIG. 4, a power calculation section 31 calculates a power value by squaring an output of the subtracter 5. A MLSE (Maximum likelihood sequence Estimation) section 32 is constituted of an ACS (Add Compare Select) processing section 33 and a memory 34. The ACS processing section 33 holds results (path-metric values) of the addition of input values and previous values , the number of which are equal to the state number, and which is stored in the memory 34 (the region where the previous values are stored is hereinafter designated by reference character "A"), in regions other than the region "A" in the memory 34. When the ACS processing section 33 completes the operation to all of the considerable prospective symbol series, the ACS processing section 33 compares the largeness of the path-metric value at each state, and stores the minimum value in the region "A" in the memory 34. The outputs of the ACS processing section 33 are path-metric values selected in each state.

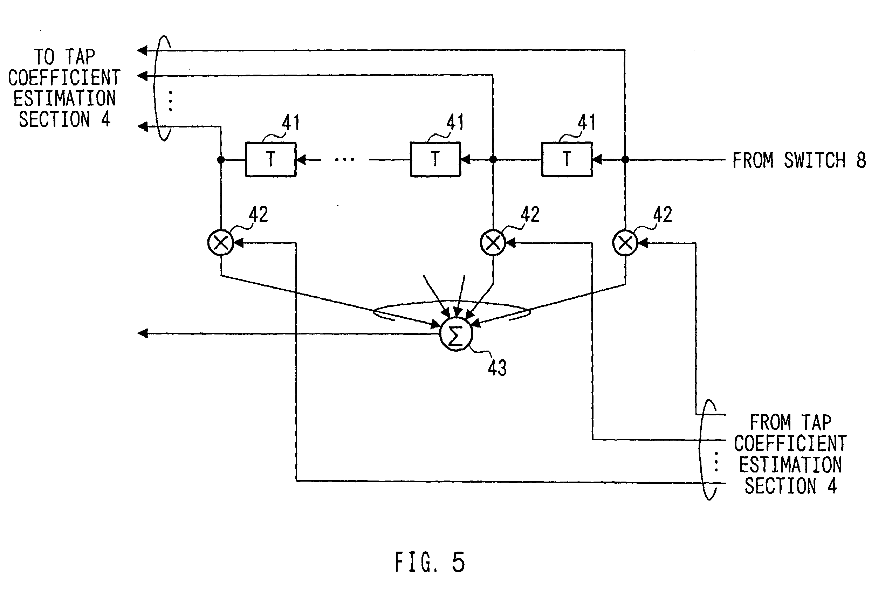

Next, FIG. 5 is referred while the configuration of the replica generation section 9 is referred. In the FIG. 5, delay devices 41 are delay devices for delaying an input known signal or an input prospective symbol series for a symbol period T. Multipliers 42 multiply each taken-in input signal by a tap coefficient instructed by the tap coefficient estimation section 4, respectively, to perform the weighting processing of them. A summation 43 adds all of the outputs of the multipliers 42, and outputs a replica signal.

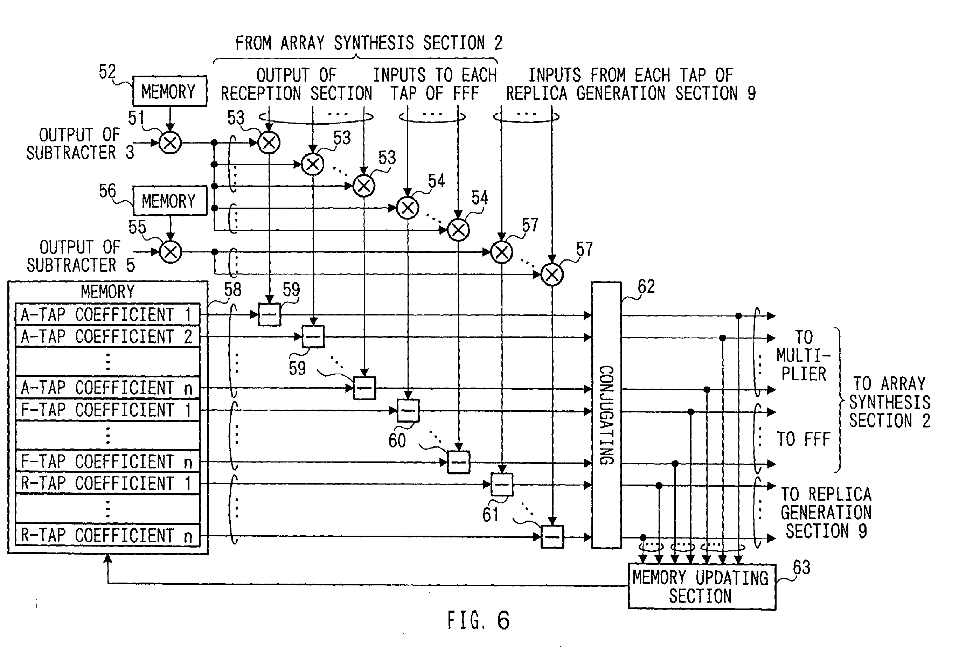

Next, FIG. 6 is referred while the configuration of the tap coefficient estimation section 4 is described. In the FIG. 6, a multiplier 51 multiplies an output signal of the subtracter 3 by a modification coefficient held by a memory 52. Multipliers 53 multiply output signals of the reception processing sections 11 by an output of the multiplier 51. Multipliers 54 multiply output signals of the FFF 14 by the output of the multiplier 51.

A multiplier 55 multiplies an output signal of the subtracter 5 by a modification coefficient held by a memory 56. Multipliers 57 multiply output signals of the reception processing sections 11 by an output of the multiplier 55.

A memory 58, the addresses of which are managed, holds tap coefficients to be input into the multipliers 12 in the array synthesis section 2 (hereinafter, referred to as "A-tap coefficients") 1-n, tap coefficients to be input into the FFF 4 in the array synthesis section 2 (hereinafter, referred to as "F-tap coefficients") 1-n, and tap coefficients to be input into the multipliers 42 in the replica generation section 9 (hereinafter, referred to as "R-tap coefficients") 1-n.

Subtracters 59 subtract the outputs of the multipliers 53 from the A-tap coefficients 1-n held in the memory 58. Subtracters 60 subtract the outputs of the multipliers 54 from the F-tap coefficients 1-n held in the memory 58. Subtracters 61 subtract the outputs of the multipliers 57 from the R-tap coefficients 1-n held in the memory 58.

A conjugating section 62 conjugates input signals, namely the conjugating section 62 outputs in-phase components as they are, and outputs orthogonalized components after inverting their signs. Among thus newly calculated each tap coefficient, the A-tap coefficients are output to the multipliers 12 in the array synthesis section 2, and the F-tap coefficients are output to the FFF 14 in the array synthesis section 2, and further the R-tap coefficients are output to the multipliers 42 in the replica generation section 9, respectively. A memory updating section 63 writes the calculated new tap coefficients into the memory 58 to update each stored tap coefficient to a new one.

As described above, the conventional radio receiver updates the tap coefficients for the array synthesis section and the replica generation section appropriately (for example, at every slot). Consequently, the conventional radio receiver can perform the equalization processing of a received signal adaptively to the occasional condition of a propagation path.

Incidentally, the description is given to a case where the LMS is used as the algorithm for updating the tap coefficients, however the usable algorithm is not limited to the LMS.

However, because the number of the tap coefficients to be estimated in a tap estimation section is large in the conventional radio receiver, the conventional radio receiver has a problem that the training time necessary for increasing estimation errors to be small enough is long.

Now, the following are supposed: the number of array series is two, the number of array elements in each array series is two, the number of taps in the FFF provided in each array element is four, and the number of taps in the replica generation section is two (one of the taps is fixed to a constant number "1"). Then, the number of the taps to be estimated is seventeen. Because the training time necessary for increasing the estimation errors to be small enough is known to be about the symbol time periods of a numerical value that is twice as many as the number of taps to be estimated by the rule of thumb, the training time required here is estimated to thirty-four symbol time periods.

Because the training processing is performed during the symbol time period of a known signal added to a transmission data, when the known signal section is shorter than the symbol time period necessary for the training processing (34 symbol time periods in the aforesaid example), an error that cannot be trained is generated, and consequently the Bit Error Rate (BER) thereof deteriorates. Moreover, if known signals, the period of which is equal to the symbol time periods necessary for the training, are added to the transmission data and are transmitted, a problem that the transmitting efficiency thereof deteriorates is come up.

Disclosure of Invention

The object of the present invention is to provide a radio receiver in which the time necessary for the convergence of tap coefficients is shortened and the deterioration of transmitting efficiency is prevented and a tap coefficient estimation method thereof.

The subject matter of the present invention is to shorten the time necessary for the convergence of tap coefficients and to prevent the deterioration of transmitting efficiency by providing a tap coefficient estimation section at every specified function so that tap coefficient estimation is not performed collectively.

Brief Description of Drawings

FIG. 1 is a block diagram showing the schematic configuration of a conventional radio receiver;

FIG. 2 is a block diagram showing the schematic configuration of the array synthesis section of the conventional radio receiver;

FIG. 3 is a block diagram showing the schematic configuration of the FFF of the conventional radio receiver;

FIG. 4 is a block diagram showing the schematic configuration of the maximum likelihood sequence estimation section of the conventional radio receiver;

FIG. 5 is a block diagram showing the schematic configuration of the replica generation section of the conventional radio receiver;

FIG. 6 is a block diagram showing the schematic configuration of the tap coefficient estimation section of the conventional radio receiver;

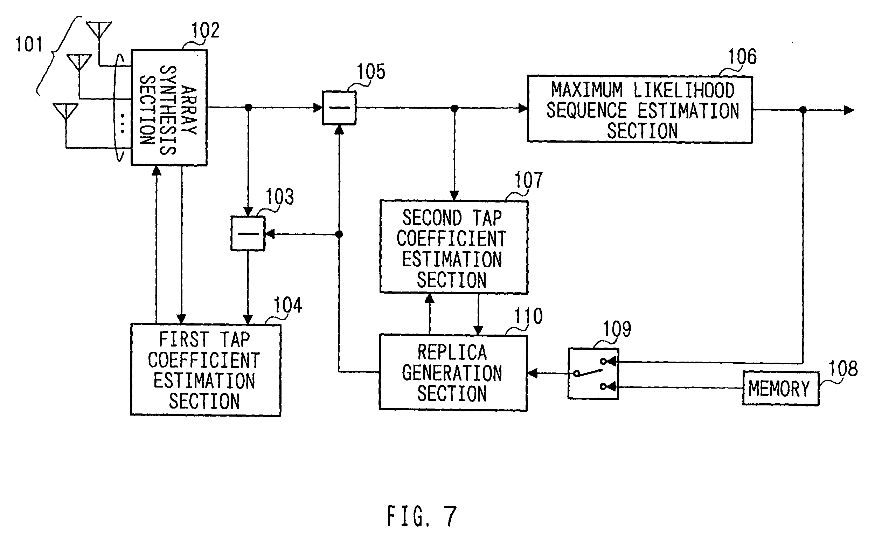

FIG. 7 is a block diagram showing the schematic configuration of a radio receiver according to embodiment 1 of the present invention;

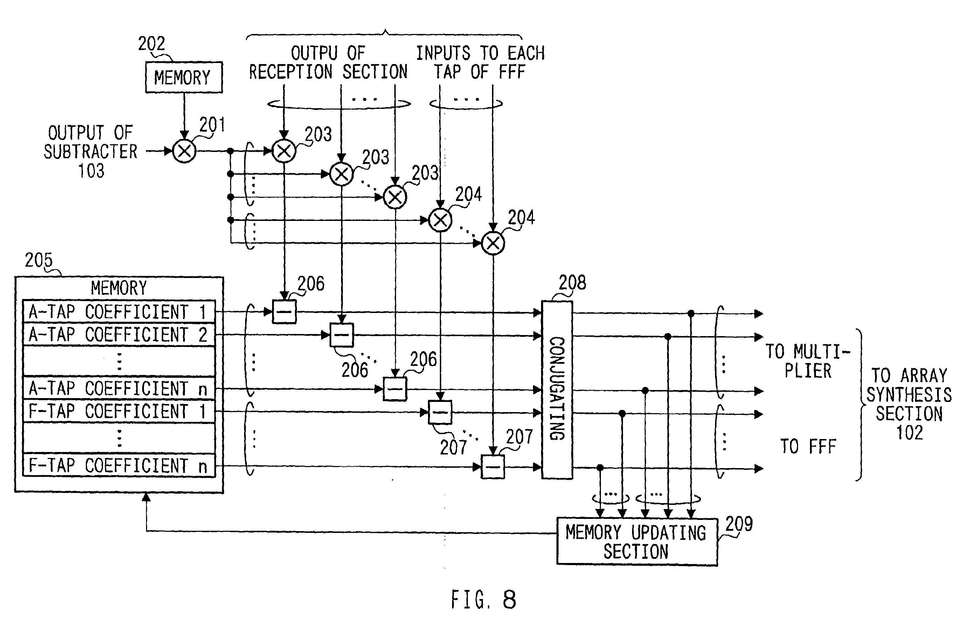

FIG. 8 is a block diagram showing the schematic configuration of the first tap coefficient estimation section of the radio receiver according to the embodiment 1 of the present invention;

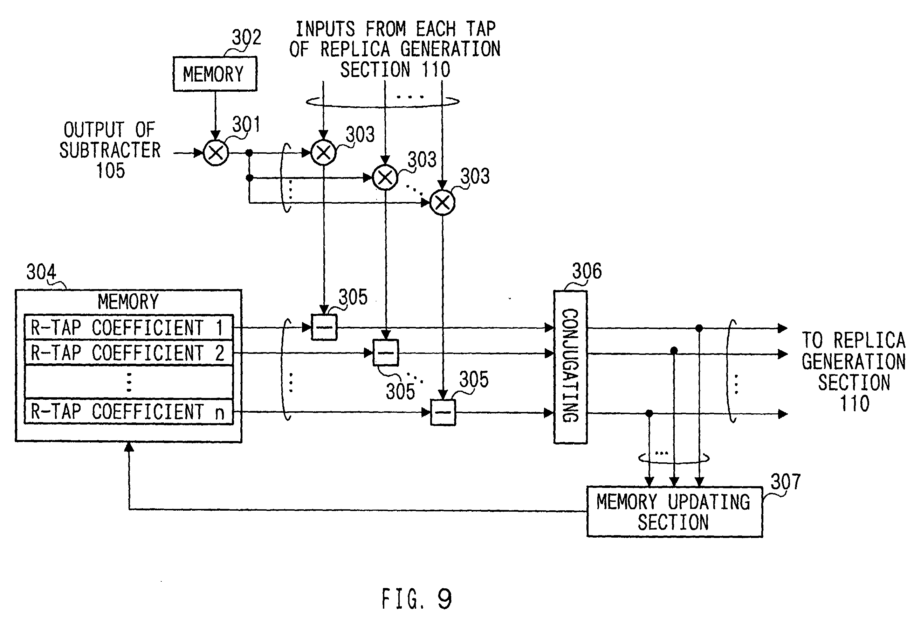

FIG. 9 is a block diagram showing the schematic configuration of the second tap coefficient estimation section of the radio receiver according to the embodiment 1 of the present invention;

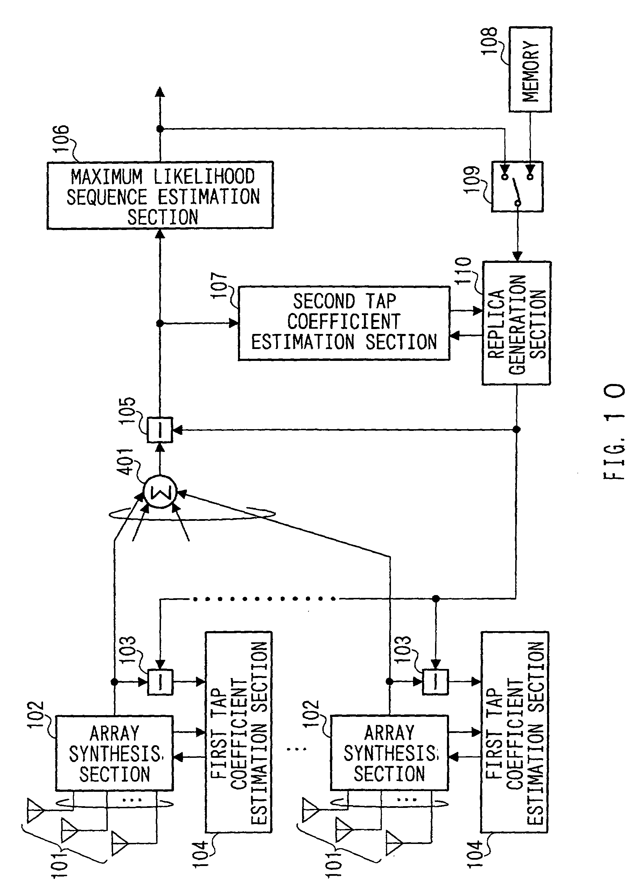

FIG. 10 is a block diagram showing the schematic configuration of a radio receiver according to embodiment 2 of the present invention;

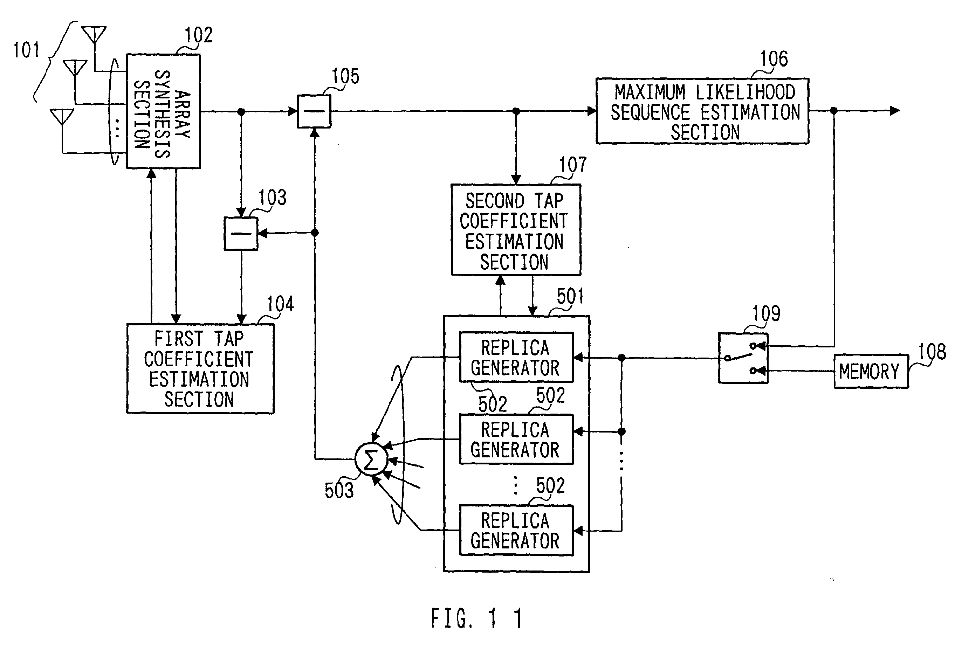

FIG. 11 is a block diagram showing the schematic configuration of a radio receiver according to embodiment 3 of the present invention;

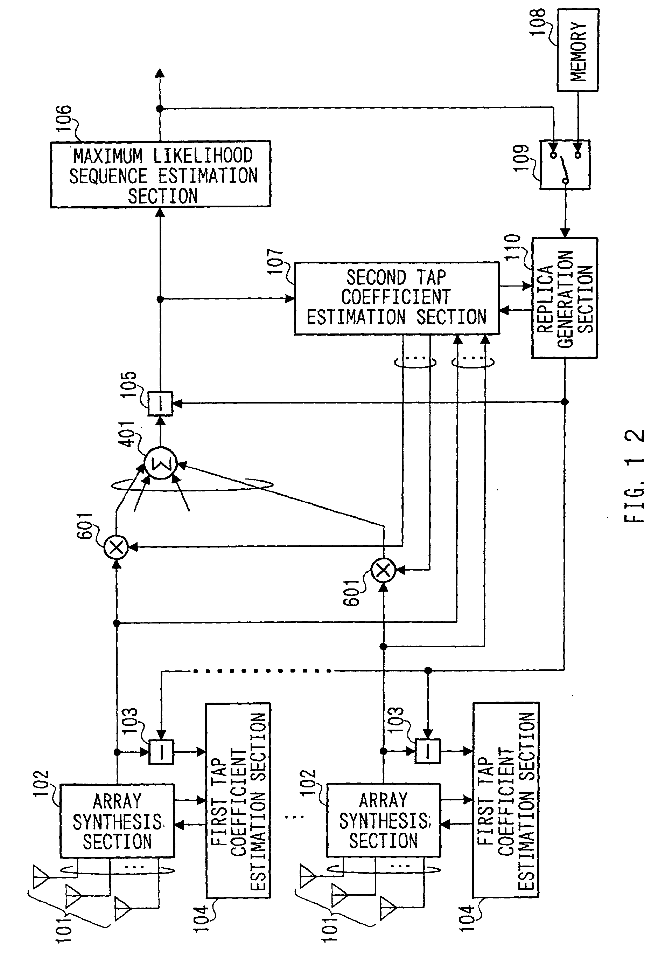

FIG. 12 is a block diagram showing the schematic configuration of a radio receiver according to embodiment 4 of the present invention;

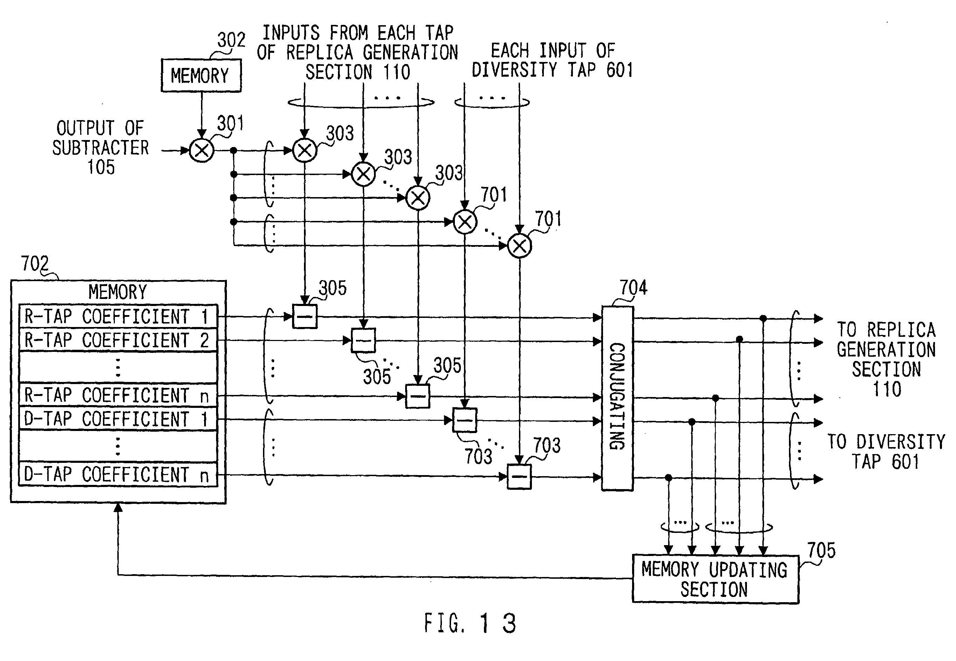

FIG. 13 is a block diagram showing the schematic configuration of the second tap coefficient estimation section of the radio receiver according to the embodiment 4 of the present invention;

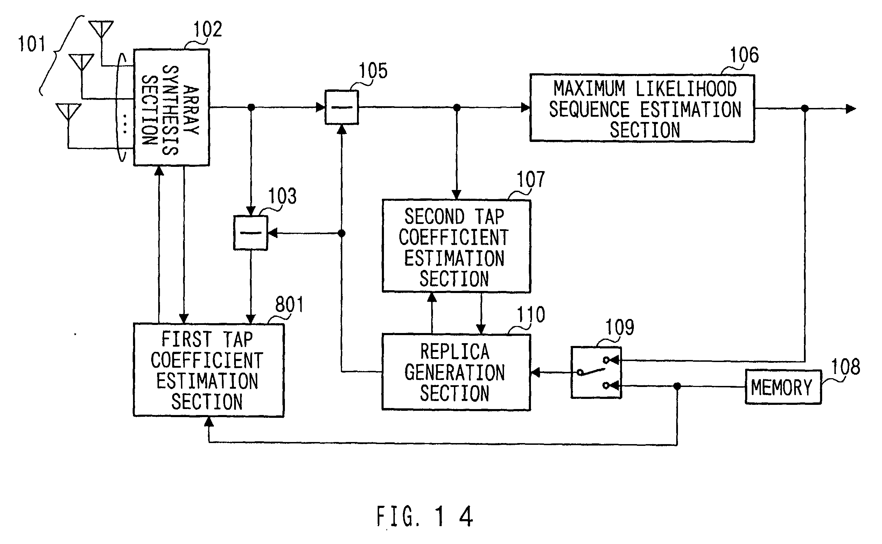

FIG. 14 is a block diagram showing the schematic configuration of a radio receiver according to embodiment 5 of the present invention;

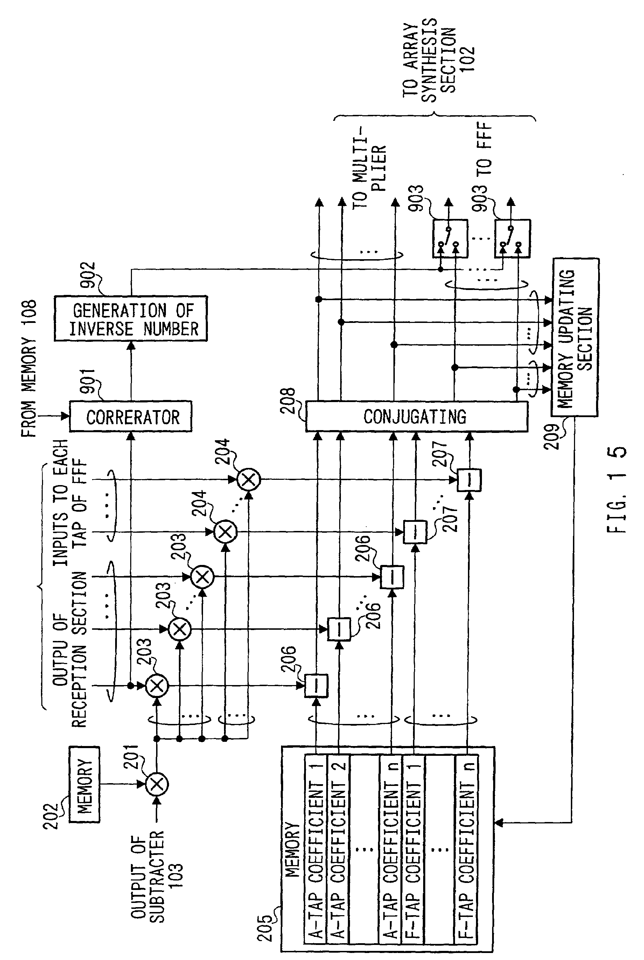

FIG. 15 is a block diagram showing the schematic configuration of the first tap coefficient estimation section of the radio receiver according to the embodiment 5 of the present invention;

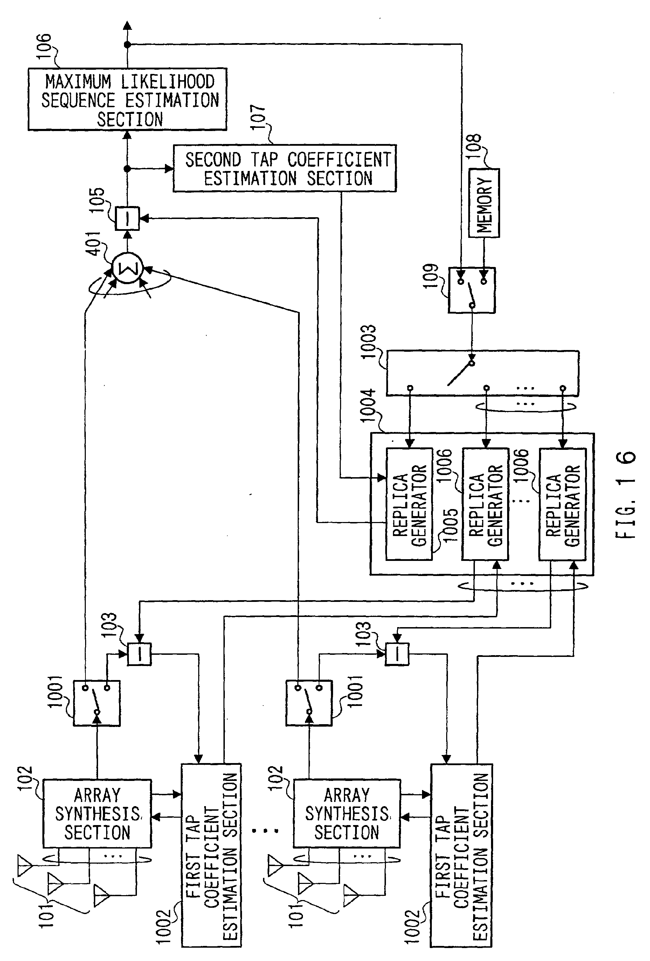

FIG. 16 is a block diagram showing the schematic configuration of a radio receiver according to embodiment 6 of the present invention;

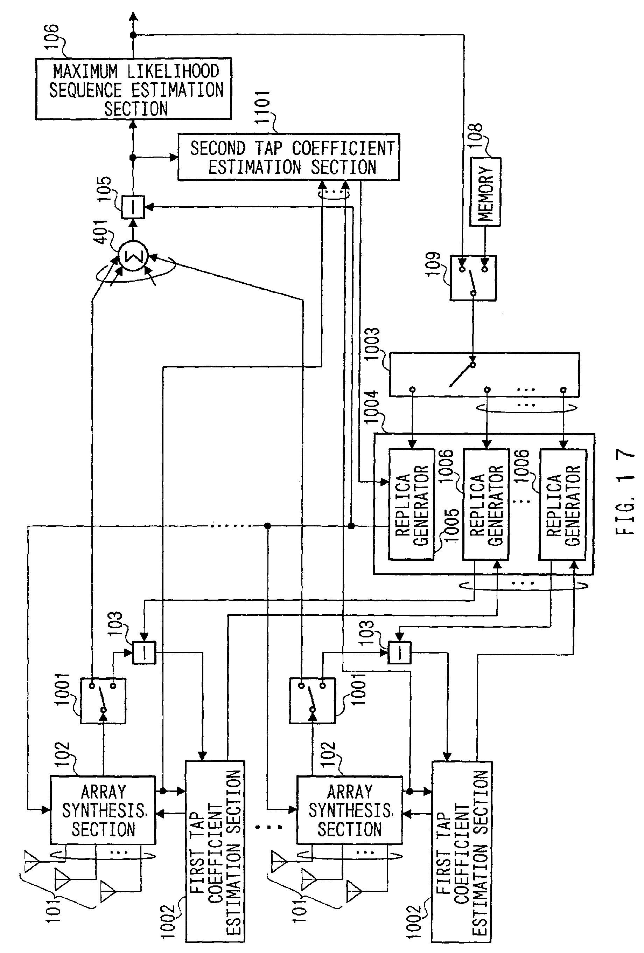

FIG. 17 is a block diagram showing the schematic configuration of a radio receiver according to embodiment 7 of the present invention;

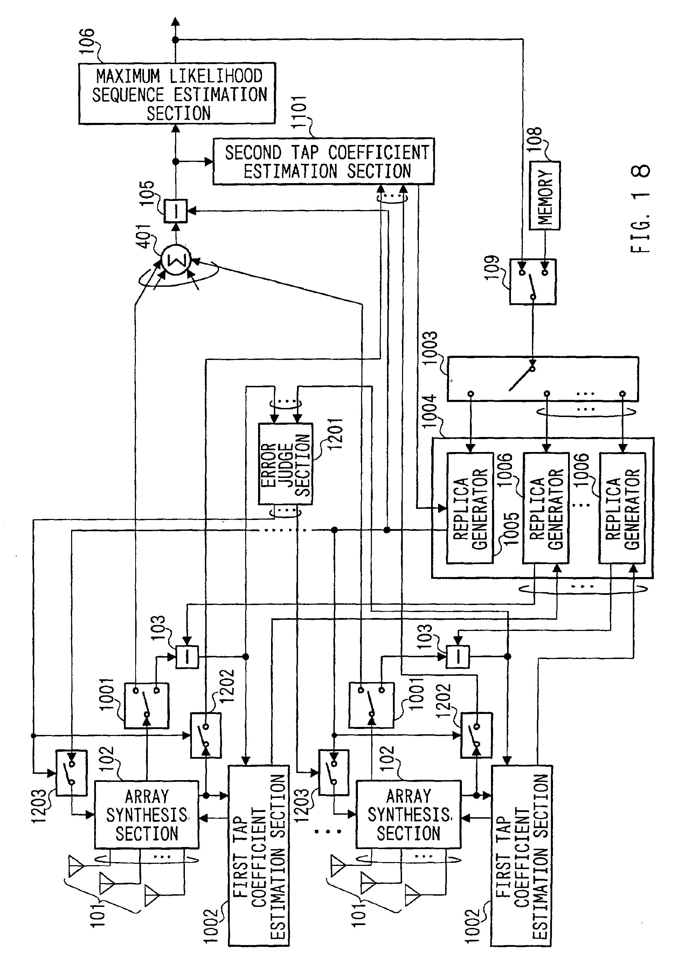

FIG. 18 is a block diagram showing the schematic configuration of a radio receiver according to embodiment 8 of the present invention;

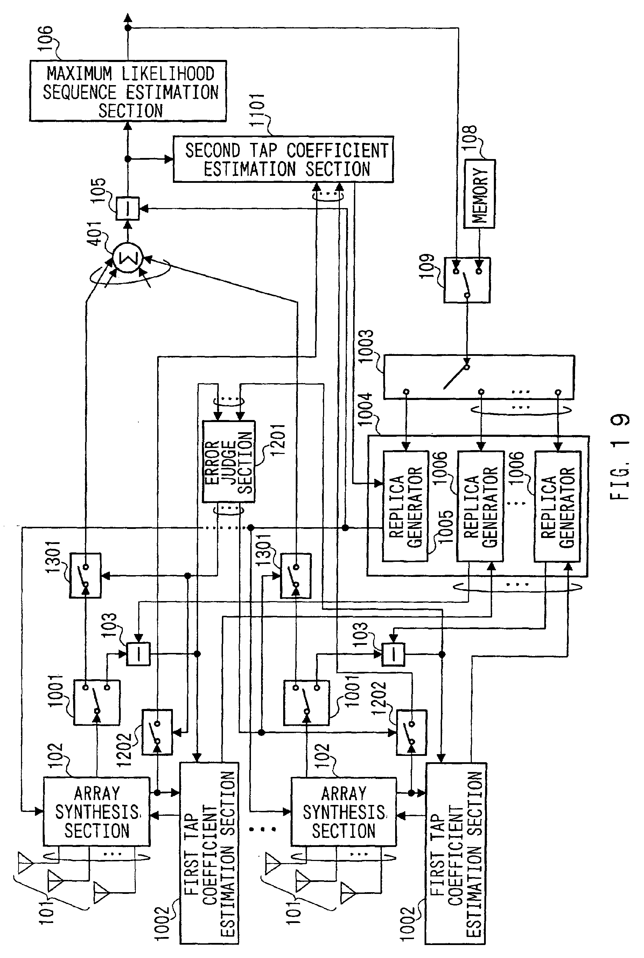

FIG. 19 is a block diagram showing the schematic configuration of a radio receiver according to embodiment 9 of the present invention;

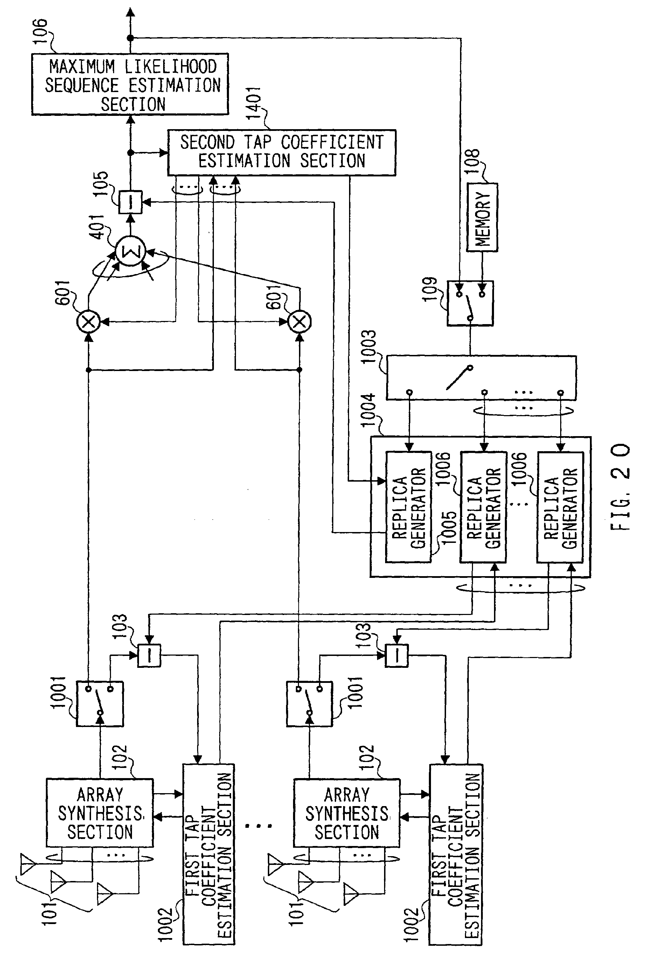

FIG. 20 is a block diagram showing the schematic configuration of a radio receiver according to embodiment 10 of the present invention;

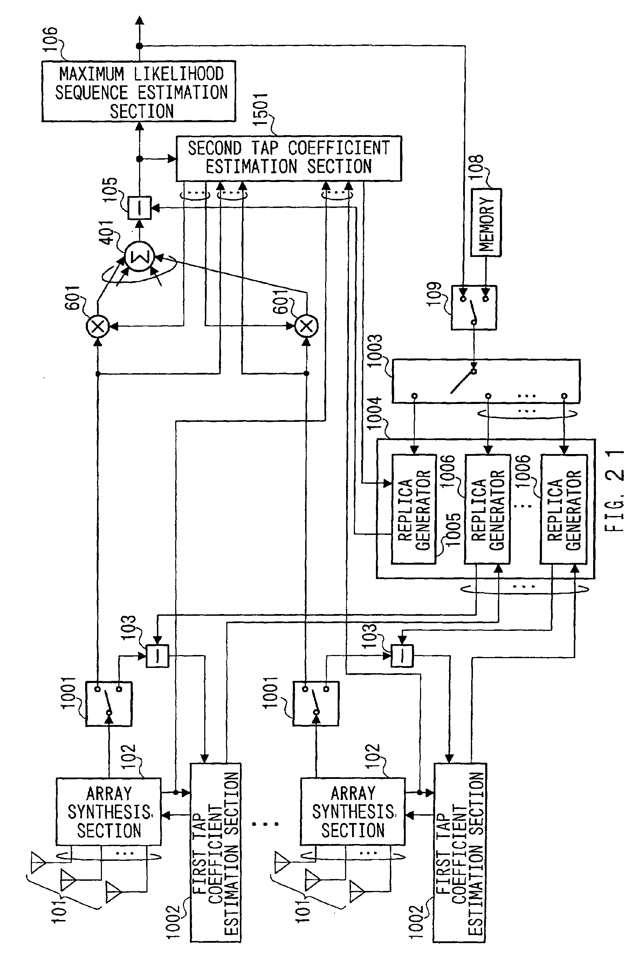

FIG. 21 is a block diagram showing the schematic configuration of a radio receiver according to embodiment 11 of the present invention;

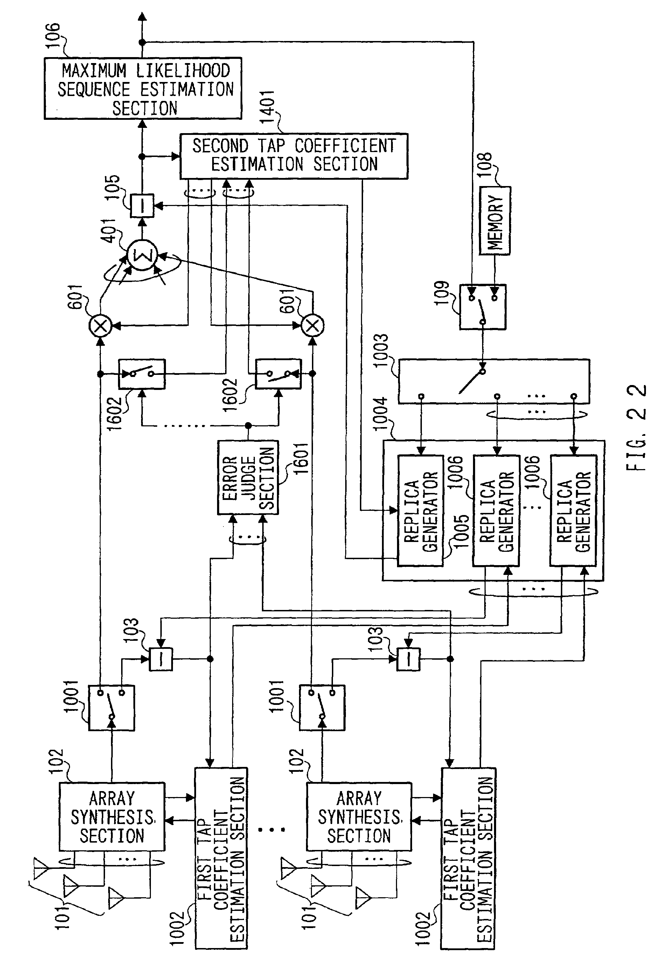

FIG. 22 is a block diagram showing the schematic configuration of a radio receiver according to embodiment 12 of the present invention; and

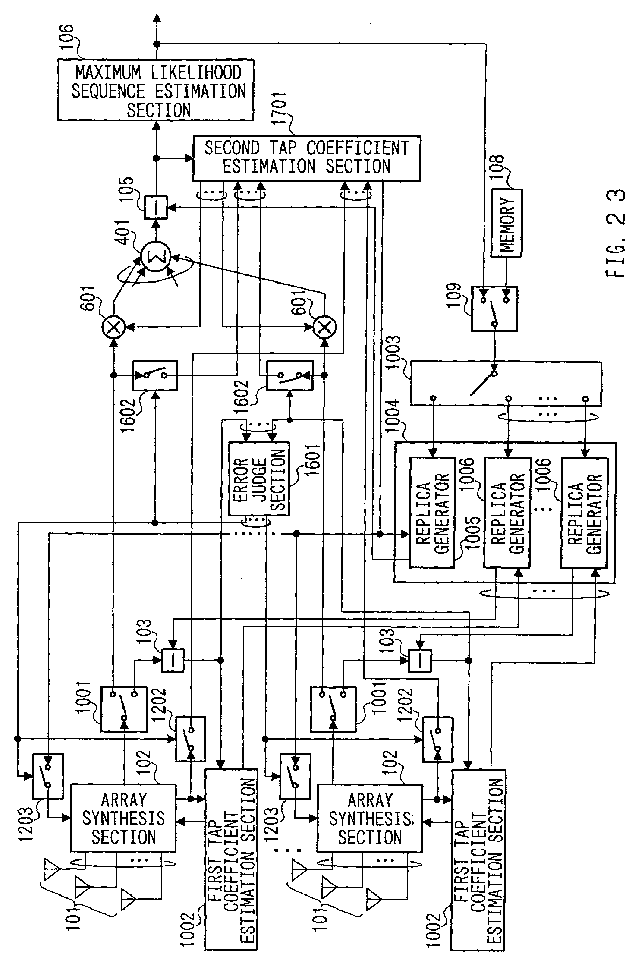

FIG. 23 is a block diagram showing the schematic configuration of a radio receiver according to embodiment 13 of the present invention.

Best Mode for Carrying Out the Invention

Hereinafter, the attached drawings are referred while the embodiments of the present invention are described.

(EMBODIMENT 1)

A radio receiver according to the present embodiment has two tap coefficient estimation sections.

Hereinafter, FIG. 7 to FIG. 9 are referred while the radio receiver according to the present embodiment is described. FIG. 7 is a block diagram showing the schematic configuration of the radio receiver according to the embodiment 1 of the present invention; FIG. 8 is a block diagram showing the schematic configuration of the first tap coefficient estimation section of the radio receiver according to the embodiment 1 of the present invention; and FIG. 9 is a block diagram showing the schematic configuration of the second tap coefficient estimation section of the radio receiver according to the embodiment 1 of the present invention.

In FIG. 7, adaptive array antennas 101 receive radio signals. An array synthesis section 102 performs the reception processing of the received signals from each antenna, and performs the weighting processing of the received signals after the reception processing, and then synthesizes the received signals after the weighting processing. Incidentally, because the configuration of the array synthesis section 102 is the same as that of the prior art, the detailed description thereof is omitted.

A subtracter 103 subtracts a replica signal generated by a replica generation section 110, which will be described later, from the received signal after the array synthesis processing. The result of the subtraction is used as a parameter when a first tap coefficient estimation section 104, which will be described later, calculates tap coefficients in the array synthesis processing.

The first tap coefficient estimation section 104 calculates the tap coefficient at the time of the array synthesis by utilizing an output of the subtracter 103 as the parameter. The details of the operation will be described later.

A subtracter 105 subtracts a replica signal generated by the replica generation section 110, which will be described later, from the received signal after the array synthesis processing. The result of the subtraction is used as a parameter at the time of the calculation of the tap coefficient at the time of the generation of a replica signal by a second tap coefficient estimation section 107, which will be described later.

A maximum likelihood sequence estimation section 106 judges the received signal in conformity with the Viterbi algorithm by using an output from the subtracter 105 as likelihood information, and outputs a prospective symbol series.

A second tap coefficient estimation section 107 calculates the tap coefficient at the time of the generation of the replica signal by utilizing an output of the subtracter 105 as the parameter. The details of the operation will be described later.

A memory 108 holds a known signal. A switch 109 outputs the known signal stored in the memory 108 to the replica generation section 110 at the time of the tap coefficient estimation by means of the known signal in symbol synchronization timing, and outputs the prospective symbol series of the received signal to the replica generation section 110 in the other case. Incidentally, the symbol synchronization timing can be obtained from any one of reception processing sections.

The replica generation section 110 multiplies a prospective symbol series of the known signal or the received signal by the tap coefficient that has been estimated by the second tap coefficient estimation section 107 to generate the replica signal. Incidentally, because the configuration of the replica generation section 110 is the same as that of the prior art, the detailed description thereof is omitted.

Next, FIG. 8 is referred while the configuration of the first tap coefficient estimation section 104 is described. In the FIG. 8, a multiplier 201 multiplies an output signal of the subtracter 103 by a modification coefficient held by a memory 202. The modification coefficient is a weighting coefficient for determining the extent of modification, and the modification coefficient is determined to be a large value when an error is large immediately after the operation of estimation has been started, and is changed to smaller values as the error decreases.

Multipliers 203 multiply output signals of the reception processing sections of the array synthesis section 102 by an output of the multiplier 201. Multipliers 204 multiply output signals of the FFF of the array synthesis section 102 by the output of the multiplier 201.

A memory 205, the addresses of which are managed, holds A-tap coefficients 1-n and F-tap coefficients 1-n. Incidentally, the character "n" in the notations of "1-n" does not indicate that the number of A-tap coefficients and the number of F-tap coefficients are the same. Namely, there can be a case where the memory 205 holds A-tap coefficients 1-8 and F-tap coefficients 1-3. The situation is the same in the following description.

Subtracters 206 subtract the outputs of the multipliers 203 from the A-tap coefficients 1-n held in the memory 205. Subtracters 207 subtract the outputs of the multipliers 204 from the F-tap coefficients 1-n held in the memory 205.

A conjugating section 208 conjugates input signals, namely the conjugating section 208 outputs in-phase components as they are, and outputs orthogonalized components after inverting their signs. Among thus newly calculated each tap coefficient, the A-tap coefficients are output to the multipliers in the array synthesis section 102, and the F-tap coefficients are output to the FFF in the array synthesis section 102, respectively.

A memory updating section 209 writes the calculated new tap coefficients into the memory 205 to update each stored tap coefficient to a new one.

Next, FIG. 9 is referred while the configuration of the second tap coefficient estimation section 107 is described. In FIG. 9, a multiplier 301 multiplies an output signal of the subtracter 105 by a modification coefficient held by a memory 302. Multipliers 303 multiply input signals from each tap of the replica generation section 110 by an output of the multiplier 301.

A memory 304, the addresses of which are managed, holds R-tap coefficients 1-n. Subtracters 305 subtract the outputs of the multipliers 303 from the R-tap coefficients 1-n held in the memory 304.

A conjugating section 306 conjugates input signals, namely the conjugating section 306 outputs in-phase components as they are, and outputs orthogonalized components after inverting their signs. Thus newly calculated R-tap coefficients are output to the multipliers in the replica generation section 110.

A memory updating section 307 writes the calculated new tap coefficients into the memory 304 to update stored R-tap coefficients to new ones.

Next, the operation of the radio receiver having the aforesaid configuration is described.

Radio signals received by the adaptive array antennas 101 receive the reception processing in the synthesis section 102 at every antenna, and then each of the received signals receives the weighting processing with the A-tap coefficient to be synthesized. Moreover, the synthesized received signal is made to pass through the FFF for the absorption of timing jitters and the absorption of synchronization deviations.

The error of the received signal having received the array synthesis from a replica signal is calculated by the subtracter 103, and the error is used as a parameter in the operation of the adaptive algorithm in the first tap coefficient estimation section 104. The A-tap coefficients and the F-tap coefficients in the array synthesis section 102 are suitably updated by the first tap coefficient estimation section 104.

That is, the array synthesis section 102 outputs the received signal having received the weighting processing with the present A-tap coefficients and F-tap coefficients into the first tap coefficient estimation section 104. The first tap coefficient estimation section 104 estimates new A-tap coefficients and F-tap coefficients (expression 1) by using the received signal, the present A-tap coefficients and F-tap coefficients that are held in the memory 205, the error, which is the output of the subtracter 103, of the received signal after the synthesis and the replica signal, and a modification coefficient held in the memory 202. The estimated new A-tap coefficients and F-tap coefficients are output to the memory 205 of the first tap coefficient estimation section 104 and the array synthesis section 102, and thereby the A-tap coefficients and the F-tap coefficients in the array synthesis section 102 are updated.

$$l(n+1) = l(n) - áe(n)X(n+1) \qquad \text{(expression 1)}$$

where "l" denotes a tap coefficient; "á" denotes a modification coefficient; "e" denotes an error; "X" denotes an input signal; and "n" denotes a sampling time.

Furthermore, the subtracter 105 calculates the error of the received signal after the array synthesis from the replica signal, and the error is used as a parameter in the R-tap coefficients estimation in the second tap coefficient estimation section 107. The R-tap coefficients in the replica generation section 110 are suitably updated by the second tap coefficient estimation section 107.

That is, replica generation section 110 outputs the signal concerning the present R-tap coefficients to the second tap coefficient estimation section 107. The second tap coefficient estimation section 107 estimates new R-tap coefficients (expression 1) by using the aforesaid signal, the modification coefficient existing in the memory 302, the present R-tap coefficients existing in the memory 304, and the output (error) by the subtracter 105. The estimated new R-tap coefficients are output to the memory 304 and the replica generation section 110, and thereby the R-tap coefficients in the replica generation section 110 are updated.

Furthermore, the error of the received signal after the array synthesis that is calculated by the subtracter 105 from the replica signal is used as the likelihood information when the received signal is judged by the maximum likelihood sequence estimation section 106. The received signal judged by the use of the Viterbi algorithm is output as a prospective symbol series.

As described above, according to the present embodiment, because all the tape coefficient estimation in a radio receiver are not collectively estimated and updated, but are estimated and updated by the separated two tap coefficient estimation sections, then the time necessary for the convergence of the tap coefficients can be shortened, and the deterioration of the transmitting efficiency can be prevented.

Furthermore, in the present embodiment, a case where LMS, which is a kind of the adaptive algorithms, is used in each tap coefficient estimation section, but the present invention can be implemented by the other algorithms.

(EMBODIMENT 2)

A radio receiver according to the present embodiment has a configuration similar to that of the embodiment 1 except for that a plurality of series of the adaptive array antennas are provided.

Hereinafter, FIG. 10 is referred while the radio receiver according to the present embodiment is described. FIG. 10 is a block diagram showing the schematic configuration of the radio receiver according to the embodiment 2 of the present invention. Incidentally, the elements similar to those of the embodiment 1 are designated by the same reference marks as those in the embodiment 1, and the description concerning them are omitted.

In FIG. 10, the subtracter 103 and the first tap coefficient estimation section 104 are provided to every array synthesis section 102, and a summation 401 adds the output from each array synthesis section 102 to output the added result to the subtracter 105.

As described above, according to the present embodiment, the tap coefficient estimation section in charge of the estimation of tap coefficients in the array synthesis section is provided to each array synthesis section. Consequently, even if the array series are plural, the tap coefficient estimation can be performed by a front step and a rear step separately.

(EMBODIMENT 3)

A radio receiver according to the present embodiment has a configuration similar to that of the embodiment 1 except for that a plurality of replica generators are provided.

Hereinafter, FIG. 11 is referred while the radio receiver according to the present embodiment is described. FIG. 11 is a block diagram showing the schematic configuration of the radio receiver according to the embodiment 3 of the present invention. Incidentally, the elements similar to those of the embodiment 1 are designated by the same reference marks as those in the embodiment 1, and the description concerning them are omitted.

In FIG. 11, a replica generation section 501 has a plurality of replica generators 502, a summation 503 adds the output of each replica generator 502 and outputs the result of the addition to the subtracter 103 and the subtracter 105.

As described above, according to the present embodiment, the error estimation is performed by the use of a plurality of replica signals. Consequently, a plurality of interference waves from the same arriving direction can be removed.

(EMBODIMENT 4)

A radio receiver according to the present embodiment has a configuration similar to that of the embodiment 2 except for that diversity processing is performed by adding the output signals of a plurality of array synthesis sections after performing their weighting processing.

Hereinafter, FIGs. 12 and 13 are referred while the radio receiver according to the present embodiment is described. FIG. 12 is a block diagram showing the schematic configuration of the radio receiver according to the embodiment 4 of the present invention, and FIG. 13 is a block diagram showing the schematic configuration of the second tap coefficient estimation section of the radio receiver according to the embodiment 4 of the present invention. Incidentally, the elements similar to those of the embodiment 1 are designated by the same reference marks as those in the embodiment 1, and the description concerning them are omitted.

In FIG. 12, multipliers 601 multiply each received signal before being input into the summation 401 by a diversity tap coefficient estimated by the second tap coefficient estimation section 107 (hereinafter referred to as "D-tap coefficient"). The diversity tap coefficient is estimated by the second tap coefficient estimation section 107. The configuration of the second tap coefficient estimation section that estimates not only the replica tap but also the diversity tap is shown in FIG. 13.

In FIG. 13, multipliers 701 multiply each input signal to be input to the multipliers 601 by an output of the multiplier 301. A memory 702, the addresses of which are managed, holds R-tap coefficients 1-n and D-tap coefficients 1-n. Subtracters 703 subtract the outputs of the multipliers 701 from the D-tap coefficients 1-n held in the memory 702.

A conjugating section 704 conjugates input signals, namely the conjugating section 704 outputs in-phase components as they are, and outputs orthogonalized components after inverting their signs. Thus newly calculated R-tap coefficients are output to the multipliers in the replica generation section 110, and thus newly calculated D-tap coefficients are output to the multipliers 601.

A memory updating section 705 writes the calculated new tap coefficients into the memory 702 to update stored R-tap coefficients and D-tap coefficients to new ones.

As described above, according to the present embodiment, the diversity is performed between a plurality of array series. Consequently, the BER can be improved.

(EMBODIMENT 5)

A radio receiver according to the present embodiment has a configuration similar to that of the embodiment 1 except for that initial values of tap coefficients are provided in the FFF in the array synthesis section.

Hereinafter, FIGS. 14 and 15 are referred while the radio receiver according to the present embodiment is described. FIG. 14 is a block diagram showing the schematic configuration of the radio receiver according to the embodiment 5 of the present invention. FIG. 15 is a block diagram showing the schematic configuration of the first tap coefficient estimation section of the radio receiver according to the embodiment 5 of the present invention. Incidentally, the elements similar to those of the embodiment 1 are designated by the same reference marks as those in the embodiment 1, and the detailed description concerning them are omitted.

In FIG. 14, a known signal held in the memory 108 is input into a first tap coefficient estimation section 801. In FIG. 15, a correlator 901 calculates a correlation value of any one of the input signals to the multiplier 203 and the known signal input from the memory 108. An inverse number generation section 902 generates the inverse number of a correlation result. A switch 903 performs its switching operation on the basis of the symbol synchronization timing controlled by a not shown timing control section to switch so as to output an output signal of the inverse number generation section 902 to the FFF at the time of the start of the FFF processing. As described above, according to the present embodiment, the initial value of the F-tap coefficients is given at the time of the start of the FFF processing. Consequently, the convergence time of tap coefficients can be shortened.

(EMBODIMENT 6)

A radio receiver according to the present embodiment has a configuration similar to that of the embodiment 2 except for that replica generators are provided to every array synthesis section.

Hereinafter, FIG. 16 is referred while the radio receiver according to the present embodiment is described. FIG. 16 is a block diagram showing the schematic configuration of the radio receiver according to the embodiment 6 of the present invention. Incidentally, the elements similar to those of the embodiment 2 are designated by the same reference marks as those in the embodiment 2, and the detailed description concerning them are omitted.

In FIG. 16, the switching operation of switches 1001 is controlled by the not shown timing control section, and then signals in known signal sections in received signals are output to the subtracters 103, and signals in user data sections are output to the summation 401.

The first tap coefficient estimation sections 1002 estimate the A-tap coefficients and F-tap coefficients by using the outputs from the subtracter 103 as parameters. The switching operation of a switch 1003 is controlled by the not shown timing control section, and the switch 1003 suitably outputs prospective symbol series or the known signals to a replica generator 1005 or any one of replica generators 1006 in a replica generation section 1004.

The replica generation section 1004 has the replica generator 1005 for the second tap coefficient estimation section 107 and the plural replica generators 1006 corresponding to each of the plural first tap coefficient estimation section 1002, respectively. The replica generation section 1004 generates a replica signal at every array series.

As described above, according to the present embodiment, a replica signal is generated at every array series. Consequently, the amount of operation can be decreased and the time necessary for convergence can be shortened.

(EMBODIMENT 7)

A radio receiver according to the present embodiment has a configuration similar to that of the embodiment 6 except for that the first tap coefficient estimation section performs the estimation of the A-tap coefficients at the time of training processing and the second tap coefficient estimation selection performs the estimation of the A-tap coefficients at the time of tracking processing.

Hereinafter, FIG. 17 is referred while the radio receiver according to the present embodiment is described. FIG. 17 is a block diagram showing the schematic configuration of the radio receiver according to the embodiment 7 of the present invention. Incidentally, the elements similar to those of the embodiment 6 are designated by the same reference marks as those in the embodiment 6, and the detailed description concerning them is omitted.

In FIG. 17, a second tap coefficient estimation section 1101 estimates the A-tap coefficients on the basis of the input signals to the multipliers in the array synthesis section 102 after the initial values of the A-tap coefficients are set by the first tap coefficient estimation sections 1002, namely at the time of the tracking processing.

As described above, according to the present embodiment, the estimation of tap coefficients at the time of the training processing is performed by the replica generator and the tap coefficient estimation section provided to each array synthesis section, and the estimation of the tap coefficients at the time of tracking processing is collectively performed by one replica generator and one tap coefficient estimation section. Consequently, the amount of operation can be decreased and the time necessary for convergence can be shortened.

(EMBODIMENT 8)

A radio receiver according to the present embodiment has a configuration similar to that of the embodiment 7 except for that when the error between the received signal after the array synthesis processing and the replica signal is small, the tap coefficient determined in the training processing is set to be a fixed value.

Hereinafter, FIG. 18 is referred while the radio receiver according to the present embodiment is described. FIG. 18 is a block diagram showing the schematic configuration of the radio receiver according to the embodiment 8 of the present invention. Incidentally, the elements similar to those of the embodiment 7 are designated by the same reference marks as those in the embodiment 7, and the detailed description concerning them is omitted.

In FIG. 18, an error judge section 1201 sets a tap coefficient calculated by the first tap coefficient estimation section 1002 in each array series at the time of the training processing as a fixed value at the time of the tracking processing by opening the switches 1202 and 1203 when the error is small enough by comparing the largeness of the output of the subtracter 103 of each array series with an arbitrary threshold value. The error judge section 1201 sets the tap coefficient calculated by the first tap coefficient estimation section 1002 at each array series at the time of the training processing as the initial value of the tap coefficient estimation at the time of the tracking processing by closing the switches 1202 and 1203 when the error is not quit small.

As described above, according to the present embodiment, when the error between the received signal after the array synthesis processing and the replica signal is small, the tap coefficient determined at the training processing is set to be the fixed tap coefficient at the time of the tracking processing. Consequently, the amount of operation can be decreased and the time necessary for convergence can be shortened.

(EMBODIMENT 9)

A radio receiver according to the present embodiment has a configuration similar to that of the embodiment 8 except for that when a received signal in the array series is neglected in the demodulation processing when the error between the received signal after the array synthesis processing and the replica signal is small.

Hereinafter, FIG. 19 is referred while the radio receiver according to the present embodiment is described. FIG. 19 is a block diagram showing the schematic configuration of the radio receiver according to the embodiment 9 of the present invention. Incidentally, the elements similar to those of the embodiment 8 are designated by the same reference marks as those in the embodiment 8, and the detailed description concerning them is omitted.

In FIG. 19, the switching operation of switches 1301 is controlled by the error judge section 1201. When the error judge section 1201 judges that the error from the output of a subtracter 103 are large, the switch 1301 provided in the array series is opened, and the received signal received by the array series is not used in the synthesizing processing by the summation 401 and is neglected in the demodulation processing.

As described above, according to the present embodiment, because the received signal in the array series in which error is large is not used in the demodulation processing, the BER deterioration can be prevented.

(EMBODIMENT 10)

A radio receiver according to the present embodiment has a configuration similar to that of the embodiment 6 except for that diversity is performed between array series.

Hereinafter, FIG. 20 is referred while the radio receiver according to the present embodiment is described. FIG. 20 is a block diagram showing the schematic configuration of the radio receiver according to the embodiment 10 of the present invention. Incidentally, the elements similar to those of the embodiments 4 and 6 are designated by the same reference marks as those in the embodiments 4 and 6, and the description concerning them is omitted.

In FIG. 20, multipliers 601 performs the weighting processing of the output signal of each array synthesis section, likewise in the case of the embodiment 4 that has been described by the use of FIG. 12. A second tap coefficient estimation section 1401 estimates not only the R-tap coefficients but also the D-tap coefficients.

As described above, according to the present embodiment, the diversity is performed between a plurality of array series in comparison with the embodiment 10. Consequently, the BER can be improved.

(EMBODIMENT 11)

A radio receiver according to the present embodiment has a configuration similar to that of the embodiment 7 except for that diversity is performed between array series.

Hereinafter, FIG. 21 is referred while the radio receiver according to the present embodiment is described. FIG. 21 is a block diagram showing the schematic configuration of the radio receiver according to the embodiment 11 of the present invention. Incidentally, the elements similar to those of the embodiments 5 and 10 are designated by the same reference marks as those in the embodiments 5 and 10, and the description concerning them is omitted.

In FIG. 21, multipliers 601 performs the weighting processing of the output signal of each array synthesis section, likewise in the case of the embodiment 4 that has been described by the use of FIG. 12. A second tap coefficient estimation section 1501 estimates not only the R-tap coefficients but also the D-tap coefficients.

As described above, according to the present embodiment, the diversity is performed between a plurality of array series in comparison with the embodiment 10. Consequently, the BER can be improved.

(EMBODIMENT 12)

A radio receiver according to the present embodiment has a configuration similar to that of the embodiment 10 except for that when the error between the received signal after array synthesis processing and the replica signal is large, the received signal in the array series is neglected in the demodulation processing.

Hereinafter, FIG. 22 is referred while the radio receiver according to the present embodiment is described. FIG. 22 is a block diagram showing the schematic configuration of the radio receiver according to the embodiment 12 of the present invention. Incidentally, the elements similar to those of the embodiments 6 and 10 are designated by the same reference marks as those in the embodiments 6 and 10, and the detailed description concerning them is omitted.

In FIG. 22, an error judge section 1601 opens a switch 1602 provided in an array series when the error judge section 1601 judges that error is large by comparing the largeness of the output of the subtracter 103 in each array series with an arbitrary threshold value, and thereby the received signal in the array series is not used in the synthesis processing by the summation 401 and is neglected in the demodulation processing.

As described above, according to the present embodiment, the received signal in an array series in which the error is large in comparison with the embodiment 11. Consequently, the deterioration of the BER can be prevented.

(EMBODIMENT 13)

A radio receiver according to the present embodiment has a configuration similar to that of the embodiment 12 except for that when the error between the received signal after the array synthesis processing and the replica signal is small, the tap coefficient determined in the training processing is set to be a fixed value.

Hereinafter, FIG. 23 is referred while the radio receiver according to the present embodiment is described. FIG. 23 is a block diagram showing the schematic configuration of the radio receiver according to the embodiment 13 of the present invention. Incidentally, the elements similar to those of the embodiments 8 and 12 are designated by the same reference marks as those in the embodiments 8 and 12, and the detailed description concerning them is omitted.

In FIG. 23, a second tap coefficient estimation section 1701 estimates the A-tap coefficients on the basis of the input signals to the multipliers in the array synthesis section 102 after the initial values of the A-tap coefficients are set by the first tap coefficient estimation sections 1002, namely at the time of the tracking processing. Moreover, an error judge section 1601 sets a tap coefficient calculated by the first tap coefficient estimation section 1002 in each array series at the time of the training processing as a fixed value at the time of the tracking processing by opening the switches 1202 and 1203 when the error is small enough by comparing the largeness of the output of the subtracter 103 of each array series with an arbitrary threshold value. The error judge section 1601 sets the tap coefficient calculated by the first tap coefficient estimation section 1002 at each array series at the time of the training processing as the initial value of the tap coefficient estimation at the time of the tracking processing by closing the switches 1202 and 1203 when the error is not quit small.

As described above, according to the present embodiment, when the error between the received signal after the array synthesis processing and the replica signal is small, the tap coefficient determined at the training processing is set to be the fixed tap coefficient at the time of the tracking processing. Consequently, the amount of operation can be decreased and the time necessary for convergence can be shortened.

Incidentally, in the aforesaid embodiments 1-13, a case where LMS is used as the algorithm for updating tap coefficients is described, but the present invention is not limited to the aforesaid condition. The present invention can apply to any case where any algorithm is used.

A radio receiver according to the present invention has a configuration comprising: an array synthesis section for receiving a radio signal in a plurality of branches and synthesizing the received signal after performing its weighting processing; a replica generation section for generating a replica signal from a prospective symbol series; a first tap coefficient estimation section for estimating a tap coefficient in the array synthesis section on the basis of an error obtained by subtracting the replica signal generated by the replica generation section from an output signal of the array synthesis section for updating the tap coefficient, and a second tap coefficient estimation section for estimating a tap coefficient in the replica generation section on the basis of the error for updating the tap coefficient.

According to the configuration, the estimation and the updating of all the tap coefficients in the radio receiver are not performed collectively, but are performed by the separated two tap coefficient estimation sections. Consequently, the time necessary for the convergence of the tap coefficients can be shortened, and the deterioration of the transmitting efficiency of the radio receiver can be prevented.

The radio receiver according to the present invention has a configuration in the aforesaid configuration, wherein: a plurality of series of the array synthesis section are provided, and the first tap coefficient estimation section is provided at every array synthesis section, and further the output signals from each array synthesis section are synthesized to be a received signal.

According to the configuration, the tap coefficient estimation sections in charge of the tap coefficient estimation of the array synthesis section are provided at every array synthesis section, and even if a plurality of array series are provided, the tap coefficient estimation is performed by being separated to a front step and a rear step. Consequently, the time necessary for the convergence of the tap coefficients can be shortened, and the deterioration of the transmitting efficiency of the radio receiver can be prevented.

The radio receiver according to the present invention has a configuration in the aforesaid configuration, wherein the replica generation section includes a plurality of replica generation sections and a synthesis section for synthesizing outputs of all of the replica generation sections.

According to the configuration, because the estimation of errors is performed by using a plurality of replica signals, a plurality of interference waves can be removed.

The radio receiver according to the present invention has a configuration in the aforesaid configuration, wherein the first tap coefficient estimation section performs its tap coefficient estimation operation by using an inverse number of a correlation value between a previously held known signal and a received signal received any one of the branches as an initial value.

According to the configuration, because the initial value of F-tap coefficients is given at the time of the start of FFF processing, the time necessary for the convergence of tap coefficients can be shortened.

The radio receiver according to the present invention has a configuration in the aforesaid configuration, wherein: the replica generation section has a plurality of replica generation sections, and each first tap coefficient estimation section and each second tap coefficient estimation section has a respectively dedicated replica generation section.

According to the configuration, because a replica signal is generated at every array series, the amount of operation can be decreased and the time necessary for the convergence can be shortened.

The radio receiver according to the present invention has a configuration in the aforesaid configuration, wherein the array synthesis section uses a tap coefficient estimated by the first tap coefficient estimation section at a time of training processing as an initial value, and uses a tap coefficient estimated by the second tap coefficient estimation section at a time of tracking processing.

According to the configuration, the estimation of the tap coefficients at the time of the training processing is performed by the replica generator and the tap coefficient estimation section provided at every array synthesis section, and the estimation of the tap coefficients at the time of tacking processing is collectively performed by one replica generator and one tap coefficient estimation section. Consequently, the amount of operation can be decreased, and the time necessary for the convergence can be shortened.

The radio receiver according to the present invention has a configuration in the aforesaid configuration, wherein the array synthesis section does not use the tap coefficient estimated by the first tap coefficient estimation section at the time of the training processing when the error is larger than an arbitrary threshold value.

According to the configuration, when the error between the received signal after array synthesis processing and the replica signal is small, a tap coefficient determined at the time of training processing is set to be a fixed tap coefficient at the time of tracking processing. Consequently, the amount of operation can be decreased and the time necessary for the convergence can be shortened.

The radio receiver according to the present invention has a configuration in the aforesaid configuration, wherein an output signal of the array synthesis section the error of which is larger than an arbitrary threshold value is not used in demodulation processing.

According to the configuration, because the received signal in an array series having a large error is not used in the demodulation processing, the deterioration of the BER can be prevented.

The radio receiver according to the present invention has a configuration in the aforesaid configuration, further comprising a diversity section for synthesizing output signals from each array synthesis section after performing their weighting processing, wherein the second tap coefficient estimation section estimates a weighting coefficient of the diversity section to update it.

According to the configuration, because the diversity is performed between a plurality of array series, the BER can be improved.

An adaptive reception method according to the present invention estimates separately a tap coefficient at a time of the array synthesis of radio signals received through a plurality of branches and a tap coefficient at a time of generation of a replica signal.

According to the method, the estimation and the updating of all the tap coefficients in a radio receiver are not collectively performed, but are performed by the separated two tap coefficient estimation sections. Consequently, the time necessary for the convergence of the tap coefficients can be shortened, and the deterioration of the transmitting efficiency of the radio receiver can be prevented.

The adaptive reception method according to the present invention in the aforesaid method, wherein a tap coefficient in a case where array synthesis is performed at every array series is separately estimated.

According to the configuration, the tap coefficient estimation sections in charge of the tap coefficient estimation of the array synthesis section are provided at every array synthesis section, and even if a plurality of array series are provided, the tap coefficient estimation is performed by being separated to a front step and a rear step. Consequently, the time necessary for the convergence of the tap coefficients can be shortened, and the deterioration of the transmitting efficiency of the radio receiver can be prevented.

The adaptive reception method according to the present invention in the aforesaid method, wherein the tap coefficient at the time of array synthesis of the radio signals received through a plurality of branches and the tap coefficient at the time of the generation of the replica signal are separately estimated at a time of training processing, and the tap coefficient at the time of array synthesis and the tap coefficient at the time of the generation of the replica signal are collectively estimated by use of a result of the training processing as an initial value at a time of tracking processing.

According to the method, because the initial value of F-tap coefficients is given at the time of the start of FFF processing, the time necessary for the convergence of tap coefficients can be shortened.

The adaptive reception method according the present invention in the aforesaid method, wherein when a difference between a received signal after array synthesis processing and a replica signal is larger than an arbitrary threshold value, the received signal after the array synthesis processing is not used in demodulation processing.

According to the method, the received signal in an array series having a large error is not used in the demodulation processing, the deterioration of the BER can be prevented.

The adaptive reception method according to the present invention in the aforesaid method, further comprising a step of performing diversity between array series, wherein a weighting coefficient used in the step of performing the diversity is estimated collectively with a tap coefficient at a time of generation of a replica signal.

According to the method, because the diversity is performed between a plurality of array series, the BER can be improved.

As described above, according to the present invention, a tap coefficient estimation section is provided at every specific function, and the estimation of tap coefficients is not collectively performed. Consequently, the time necessary for the convergence of tap coefficients can be shortened, and the deterioration of transmitting efficiency can be prevented.

This application is based on the Japanese Patent Application No. HEI 11-169697 filed on June 16, 1999, the entire content of which is expressly incorporated by reference herein.

Industrial Applicability

The present invention can be applied to a communication terminal apparatus and a base station apparatus in a digital radio communication system. The present invention makes it possible to prevent the deterioration of transmitting efficiency because the present invention shortens the time necessary for the convergence of tap coefficients.

**Claims**

1. A radio receiver comprising:

   array synthesis means for receiving a radio signal in a plurality of branches and synthesizing the received signal after performing its weighting processing;
   replica generation means for generating a replica signal from a prospective symbol series;
   first tap coefficient estimation means for estimating a tap coefficient in said array synthesis means on a basis of an error obtained by subtracting the replica signal generated by said replica generation means from an output signal of said array synthesis means for updating the tap coefficient, and
   second tap coefficient estimation means for estimating a tap coefficient in said replica generation means on the basis of the error for updating the tap coefficient.

2. The radio receiver according to claim 1, wherein:

a plurality of series of said array synthesis means are provided, and
said first tap coefficient estimation means is provided at every array synthesis means, and further
output signals from each array synthesis means are synthesized to be a received signal.

3. The radio receiver according to claim 1, wherein said replica generation means includes a plurality of replica generation sections and a synthesis section for synthesizing outputs of all of said replica generation sections.

4. The radio receiver according to claim 1, wherein said first tap coefficient estimation means performs its tap coefficient estimation operation by using an inverse number of a correlation value between a previously held known signal and a received signal received any one of the branches as an initial value.

5. The radio receiver according to claim 1, wherein:

said replica generation means has a plurality of replica generation sections, and
each first tap coefficient estimation section and each second tap coefficient estimation section has a respectively dedicated replica generation section.

6. The radio receiver according to claim 1, wherein said array synthesis means uses a tap coefficient estimated by said first tap coefficient estimation means at a time of training processing as an initial value, and uses a tap coefficient estimated by said second tap coefficient estimation means at a time of tracking processing.

7. The radio receiver according to claim 6, wherein said array synthesis means does not use the tap coefficient estimated by said first tap coefficient estimation means at the time of the training processing when said error is larger than an arbitrary threshold value.

8. The radio receiver according to claim 2, wherein an output signal of said array synthesis means the error of which is larger than an arbitrary threshold value is not used in demodulation processing.

9. The radio receiver according to claim 2, said radio receiver further comprising diversity means for synthesizing output signals from each array synthesis means after performing their weighting processing,
wherein said second tap coefficient estimation means estimates a weighting coefficient of said diversity means to update it.

10. A communication terminal apparatus equipped with a radio receiver, wherein said radio receiver comprising:

array synthesis means for receiving a radio signal in a plurality of branches and synthesizing the received signal after performing its weighting processing;
replica generation means for generating a replica signal from a prospective symbol series;
first tap coefficient estimation means for estimating a tap coefficient in said array synthesis means on a basis of an error obtained by subtracting the replica signal generated by said replica generation means from an output signal of said array synthesis means for updating the tap coefficient, and
second tap coefficient estimation means for estimating a tap coefficient in said replica generation means on the basis of the error for updating the tap coefficient.

11. A base station apparatus equipped with a radio receiver, wherein said radio receiver comprising:

array synthesis means for receiving a radio signal in a plurality of branches and synthesizing the received signal after performing its weighting processing;
replica generation means for generating a replica signal from a prospective symbol series;
first tap coefficient estimation means for estimating a tap coefficient in said array synthesis means on a basis of an error obtained by subtracting the replica signal generated by said replica generation means from an output signal of said array synthesis means for updating the tap coefficient, and
second tap coefficient estimation means for estimating a tap coefficient in said replica generation means on the basis of the error for updating the tap coefficient.

12. An adaptive reception method for estimating separately a tap coefficient at a time of array synthesis of radio signals received through a plurality of branches and a tap coefficient at a time of generation of a replica signal.

**13.** The adaptive reception method according to claim 12, wherein a tap coefficient in a case where array synthesis is performed at every array series is separately estimated.

**14.** The adaptive reception method according to claim 12, wherein the tap coefficient at the time of array synthesis of the radio signals received through a plurality of branches and the tap coefficient at the time of the generation of the replica signal are separately estimated at a time of training processing, and the tap coefficient at the time of array synthesis and the tap coefficient at the time of the generation of the replica signal are collectively estimated by use of a result of the training processing as an initial value at a time of tracking processing.

**15.** The adaptive reception method according to claim 12, wherein when a difference between a received signal after array synthesis processing and a replica signal is larger than an arbitrary threshold value, the received signal after the array synthesis processing is not used in demodulation processing.

**16.** The adaptive reception method according to claim 12, the method further comprising a step of performing diversity between array series, wherein a weighting coefficient used in said step of performing the diversity is estimated collectively with a tap coefficient at a time of generation of a replica signal.

FIG. 1

EP 1 126 633 A1

FIG. 2

FIG. 3

EP 1 126 633 A1

```
                                              ┌─ 32
                                        MLSE ─┘
                            ┌─ 31                      ┌─ 33
                   ┌──────────────┐        ┌──────────────┐
                   │    POWER     │        │     ACS      │
            ──────▶│ CALCULATION  │───────▶│  PROCESSING  │
                   │   SECTION    │        │   SECTION    │
                   └──────────────┘        └──────────────┘
                                                 ▲   │
                                                 │   ▼    ┌─ 34
                                           ┌──────────────┐
                                           │    MEMORY    │──────▶
                                           └──────────────┘
```

FIG. 4

FIG. 5

FIG. 6

FIG. 7

101

102 ARRAY SYNTHESIS SECTION

104 FIRST TAP COEFFICIENT ESTIMATION SECTION

103

105

106 MAXIMUM LIKELIHOOD SEQUENCE ESTIMATION SECTION

107 SECOND TAP COEFFICIENT ESTIMATION SECTION

110 REPLICA GENERATION SECTION

109

108 MEMORY

FIG. 8

INPUTS FROM EACH TAP
OF REPLICA GENERATION
SECTION 110

302
MEMORY

· · ·

OUTPUT OF
SUBTRACTER
105

301

303

303

303

304
MEMORY

R-TAP COEFFICIENT 1

R-TAP COEFFICIENT 2

R-TAP COEFFICIENT n

305

305

305

305

306
CONJUGATING

TO REPLICA
GENERATION
SECTION
110

307
MEMORY UPDATING
SECTION

· · ·

FIG. 9

FIG. 1 O

EP 1 126 633 A1

FIG. 1 1

EP 1 126 633 A1

FIG. 1 2

EP 1 126 633 A1

FIG. 1 3

EP 1 126 633 A1

FIG. 14

EP 1 126 633 A1

FIG. 1 5

FIG. 16

FIG. 17

106 — MAXIMUM LIKELIHOOD SEQUENCE ESTIMATION SECTION

1101 — SECOND TAP COEFFICIENT ESTIMATION SECTION

108 — MEMORY

109

105

401

1003

1004

1005 — REPLICA GENERATOR

1006 — REPLICA GENERATOR

1006 — REPLICA GENERATOR

103

1001

102 — ARRAY SYNTHESIS SECTION

101

1002 — FIRST TAP COEFFICIENT ESTIMATION SECTION

103

1001

102 — ARRAY SYNTHESIS SECTION

101

1002 — FIRST TAP COEFFICIENT ESTIMATION SECTION

FIG. 18

FIG. 19

FIG. 20

FIG. 2 1

MAXIMUM LIKELIHOOD SEQUENCE ESTIMATION SECTION — 106
SECOND TAP COEFFICIENT ESTIMATION SECTION — 1501
MEMORY — 108
105
401
601
601
109
1003
1004
REPLICA GENERATOR — 1005 / 1006
REPLICA GENERATOR — 1006
REPLICA GENERATOR
103
103
1001
1001
102
102
ARRAY SYNTHESIS SECTION
ARRAY SYNTHESIS SECTION
FIRST TAP COEFFICIENT ESTIMATION SECTION — 1002
FIRST TAP COEFFICIENT ESTIMATION SECTION — 1002
101
101

35

FIG. 2 2

EP 1 126 633 A1

FIG. 23

EP 1 126 633 A1

## INTERNATIONAL SEARCH REPORT

| International application No. |
| --- |
| PCT/JP00/03790 |

| A. CLASSIFICATION OF SUBJECT MATTER |
| --- |
| Int.Cl⁷ H04B7/10, 7/08 |
| H01Q3/26 |

According to International Patent Classification (IPC) or to both national classification and IPC

| B. FIELDS SEARCHED |
| --- |
| Minimum documentation searched (classification system followed by classification symbols) |
| Int.Cl⁷ H01Q3/00-3/46, 21/00-25/04 |
| H04B7/00, 7/02-7/12 |
| H04L1/02-1/06 |

Documentation searched other than minimum documentation to the extent that such documents are included in the fields searched
Jitsuyo Shinan Koho          1922-1996     Toroku Jitsuyo Shinan Koho  1994-2000
Kokai Jitsuyo Shinan Koho   1971-2000     Jitsuyo Shinan Toroku Koho  1996-2000

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP, 9-260941, A (YRP Idou Tsushin Kiban Gijutsu Kenkyusho | 1,2,10-13 |
| A | K.K., Fujitsu Limited), | 3-9,14-16 |
| | 03 October, 1997 (03.10.97)   (Family: none) | |
| A | JP, 10-13262, A (NTT Ido Tsushinmo K.K.), | 1-16 |
| | 16 January, 1998 (16.01.98)   (Family: none) | |
| A | JP, 10-336083, A (NTT Ido Tsushinmo K.K.), | 1-16 |
| | 18 December, 1998 (18.12.98)   (Family: none) | |
| A | JP, 2868012, B2 (YRP Idou Tsushin Kiban Gijutsu Kenkyusho | 1-16 |
| | K.K., Fujitsu Limited), | |
| | 10 March, 1999 (10.03.99)   (Family: none) | |
| A | JP, 2862083, B2 (YRP Idou Tsushin Kiban Gijutsu Kenkyusho | 1-16 |
| | K.K., Fujitsu Limited), | |
| | 24 February, 1999 (24.02.99)   (Family: none) | |
| A | JP, 2862082, B2 (YRP Idou Tsushin Kiban Gijutsu Kenkyusho | 1-16 |
| | K.K., Fujitsu Limited), | |
| | 24 February, 1999 (24.02.99)   (Family: none) | |

☒ Further documents are listed in the continuation of Box C.     ☐ See patent family annex.

| * Special categories of cited documents: | "T" later document published after the international filing date or |
| --- | --- |
| "A" document defining the general state of the art which is not considered to be of particular relevance | priority date and not in conflict with the application but cited to understand the principle or theory underlying the invention |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such |
| "O" document referring to an oral disclosure, use, exhibition or other means | combination being obvious to a person skilled in the art |
| "P" document published prior to the international filing date but later than the priority date claimed | "&" document member of the same patent family |

| Date of the actual completion of the international search | Date of mailing of the international search report |
| --- | --- |
| 30 August, 2000 (30.08.00) | 12 September, 2000 (12.09.00) |

| Name and mailing address of the ISA/ | Authorized officer |
| --- | --- |
| Japanese Patent Office | |
| Facsimile No. | Telephone No. |

Form PCT/ISA/210 (second sheet) (July 1992)

**EP 1 126 633 A1**

## INTERNATIONAL SEARCH REPORT

International application No.

PCT/JP00/03790

C (Continuation).   DOCUMENTS CONSIDERED TO BE RELEVANT

| Category* | Citation of document, with indication, where appropriate, of the relevant passages | Relevant to claim No. |
|---|---|---|
| A | JP, 11-97921, A (YRP Idou Tsushin Kiban Gijutsu Kenkyusho K.K., Fujitsu Limited), 09 April, 1999 (09.04.99)   (Family: none) | 1-16 |
| A | JP, 10-233616, A (YRP Idou Tsushin Kiban Gijutsu Kenkyusho K.K., Fujitsu Limited), 02 September, 1998 (02.09.98)   (Family: none) | 1-16 |

Form PCT/ISA/210 (continuation of second sheet) (July 1992)